# EUROPÄISCHE PATENTANMELDUNG

(11) **EP 4 050 278 A1**
(43) Veröffentlichungstag der Anmeldung: **31.08.2022**
(21) Anmeldenummer: 22158133.3
(22) Anmeldetag: 23.02.2022
(51) Int. Cl.: F24F 11/50, F24F 13/32, H04M 1/04, H04L 12/28, G06Q 10/10

(54) **HALTEVORRICHTUNG**

(30) Priorität: 25.02.2021 DE 102021104537; 22.02.2022 DE 102022201809
(71) Anmelder: Robert Bosch GmbH, 70442 Stuttgart (DE)
(72) Erfinder: Waidner, Juergen, 73274 Notzingen (DE); Sharma, Ramesh, 73207 Plochingen (DE)

(57) **Zusammenfassung**

Die Erfindung betrifft eine Haltevorrichtung (10) zur Halterung einer Bedieneinheit (11), insbesondere einer HVAC- oder ein Smarthome-Bedieneinheit, aufweisend eine Grundplatte, die zumindest ein erstes Befestigungselement (32) zur Befestigung an einer Trägervorrichtung, insbesondere einer Wand aufweist, und die zumindest eine Verriegelungseinheit (14) mit einem Verriegelungselement (20) aufweist, wobei das Verriegelungselement (20) ausgebildet ist, die Aufnahmevorrichtung (16) reversible mit der Haltevorrichtung (10) zu verbinden, und die ein Energiespeicheraufnahmeeinheit (50) aufweist, welche ausgebildet ist einen Energiespeicher aufzunehmen, und die eine elektrische Verbindungseinheit (52, 54), zur Herstellung einer elektrischen Verbindung zwischen zumindest eines in der Energiespeicheraufnahmeeinheit (50) aufgenommenen Energiespeichers und einer mit der Haltevorrichtung (10) verbundenen Bedieneinheit (11).

## Beschreibung

Die Erfindung betrifft eine Haltevorrichtung zur Halterung einer Bedieneinheit und eine Vorrichtung mit einer Bedieneinheit und einer Haltevorrichtung.

### Stand der Technik

Es sind Bedieneinheiten und Haltevorrichtung bekannt. Die bekannten Haltevorrichtungen weisen Schraublöcher auf, welches es erlauben, die Haltevorrichtung an einer Wand oder einem Gegenstand zu befestigen. Dies ist der einzige Verwendungszweck, welche die bekannten Haltevorrichtungen aufweisen.

### Offenbarung der Erfindung

Es ist Aufgabe der Erfindung den Einsatzbereich, bzw. die Verwendbarkeit einer Bedieneinheit zu erweitert.

Gelöst wird die Aufgabe mit einer erfindungsgemäßen Haltevorrichtung.

Die Erfindung geht aus von einer Haltevorrichtung zur Halterung einer Bedieneinheit. Die Bedieneinheit weist eine Aufnahmevorrichtung auf, die ein Gehäuse der Bedieneinheit bildet. Vorzugsweise handelt es sich bei der Bedieneinheit um eine Bedieneinheit zur Bedienung einer HVAC- oder ein Smarthome-Komponente. Die Haltevorrichtung umfasst eine Grundplatte, die zumindest ein erstes Befestigungselement zur Befestigung an einer Trägervorrichtung, insbesondere einer Wand aufweist. Eine Montage an Gebäudeteilen oder Gegenständen ist hierdurch gewährleitstet.

Ferner umfasst die Grundplatte der Haltevorrichtung zumindest eine Verriegelungseinheit. Die Verriegelungseinheit weist ein Verriegelungselement auf, wobei das Verriegelungselement ausgebildet ist, die Aufnahmevorrichtung, bzw. eine Bedieneinheit, reversible mit der Haltevorrichtung zu verbinden.

Auch weist die Grundplatte der Haltevorrichtung zumindest eine Energiespeicheraufnahmeeinheit auf, welche ausgebildet ist, einen Energiespeicher aufzunehmen. Die Haltevorrichtung kann Energiespeicher aufnehmen und die Bedieneinheit mit Energie versorgen. Vorzugsweise ermöglicht dies ein einfacheres Wechseln oder Wiederbeladen der Energiespeicher. Auch kann eine kabelgebundene Bedieneinheit, welche über das Kabel mit Energie versorgt wird, um eine Kabelunabhängigkeit erweitert werden. Vorzugsweise versorgt der Energiespeicher der Haltevorrichtung die Bedieneinheit mit Energie. Die Grundplatte weist weiterhin eine elektrische Verbindungseinheit, zur Herstellung einer elektrischen Verbindung zwischen zumindest eines in der Energiespeicheraufnahmeeinheit aufgenommenen Energiespeichers und einer mit der Haltevorrichtung verbundenen Bedieneinheit auf. Mittels der Verbindungseinheit wird elektrische Energie von dem Energiespeicher an die Bedieneinheit übertragen. Vorteilhaft ergibt sich eine flexibel einsetzbare Haltevorrichtung.

Durch die in den Unteransprüchen aufgeführten Maßnahmen ergeben sich vorteilhafte Weiterbildungen und Verbesserungen der erfindungsgemäßen Vorrichtung.

Eine vorteilhafte Weiterbildung ist, dass die Verriegelungseinheit zumindest ein Federelement aufweist, welches insbesondere als Federzunge oder Spiralfortsatz ausgebildet ist. Das Federelement verhindert ein ungewolltes Öffnen der Verrastung und damit ein mögliches ungewolltes Trennen der Bedieneinheit von der Haltevorrichtung und umgekehrt.

Eine vorteilhafte Weiterbildung zeichnet sich dadurch aus, dass zumindest ein, insbesondere zwei, drei oder vier, zweite Befestigungselemente ausgebildet sind. Die zweiten Befestigungselemente sind ausgebildet einen Tischständer reversible an der Haltevorrichtung aufzunehmen, wobei das zweite Befestigungselement, insbesondere eine Vertiefung und einen Hinterschnitt aufweist, in die ein korrespondierend ausgebildetes Eingriffselement des Tischständers eingreifen kann. Der Hinterschnitt wird durch einen Vorsprung, welches die Ausnehmung überragt gebildet.

Vorzugsweise weist die Bedieneinheit eine Anzeigemittel auf. Das Anzeigemittel ist an dessen Vorderseite ausgebildet. Vorzugsweise ist das Anzeigemittel derart ausgebildet, dass es insbesondere die Frontseite der Bedieneinheit bildet

Vorzugsweise weist die Bedieneinheit ein Bedienelemente auf. Vorzugsweise sind einige oder alle Bedienelement und das Anzeigemittel als ein Touchdisplay kombiniert.

Vorteilhaft kann ein Tischständer an der Haltevorrichtung und damit an der Bedieneinheit angebracht werden. Es wird eine Erweiterung des Nutzungsbereichs ermöglicht. Beispielsweise kann die Bedieneinheit auf Möbeln abgestellt werden. Der Tischständer ermöglicht beim Abstellen dennoch, dass ein Anzeigemittel des Bedienelements abgelesen werden kann. Der Tischständer ermöglicht eine aufrechte oder leicht geneigte Aufstellung. Die Bedieneinheit muss nicht flach auf das Möbel gelegt werden.

Eine vorteilhafte Weiterbildung ist, dass zumindest eines, insbesondere alle, Befestigungselement ausgebildet sind, den Tischständer auf zumindest zwei sich voneinander unterscheidenden Ausrichtungen anzuordnen. Der Tischständer kann um 180 Grad in einer gedachten Ebene gedreht werden, wobei sich die gedachte Eben parallel zur Grundplatte erstreckt. Es ergibt sich die Möglichkeit in einer ersten Ausrichtung die Bedieneinheit aufrecht, insbesondere mit zirka 70 bis 90 Grad, aufzustellen. In einer zweiten Ausrichtung wird die Bedieneinheit dagegen flacher aufgestellt. Ein Drehen der Anzeige auf die Bedieneinheit wird nicht benötigt.

Eine vorteilhafte Weiterbildung ist, dass zumindest eine der zweiten Befestigungselemente ein zweites Verriegelungselement aufweist. Das zweite Verriegelungselement ist insbesondere als eine Rastnase ausgebildet. Das zweite Verriegelungselement verrastet ein in das Befestigungselement eingreifendes Eingriffselements des Tischständers.

Eine als vorteilhafte anzusehende Weiterbildung ist, dass eine Kommunikationseinheit vorgesehen ist, welche einer mit der Haltevorrichtung über die Aufnahmevorrichtung verbundenen Bedieneinheit ermöglicht, drahtlos zu kommunizieren. Vorzugsweise sind elektrische Verbindungselemente ausgeführt, welche die elektrischen Signale von der Kommunikationseinheit zu der Gebäudesteuerung und umgekehrt leiten.

Eine vorteilhafte Weiterbildung ist, dass eine die Kommunikationseinheit direkt über einen in die Energiespeicheraufnahme eingelegten Energiespeicher mit Energie versorgt wird. Vorzugsweise versorgt der Energiespeicher die Kommunikationseinheit.

Eine vorteilhafte Weiterbildung ist, dass die Kommunikationseinheit eine Antenne aufweist. Die Antenne ist Teil der Haltevorrichtung. Sie ist vorzugsweise an der Grundplatte angeordnet. Vorzugsweise ist die Antenne Teil der Haltevorrichtung.

Eine vorteilhafte Weiterbildung ist, dass eine Sensoreinheit vorgesehen ist, welche ausgebildet ist, Umgebungsparameter, wie beispielsweise Lufttemperatur, Luftfeuchtigkeit, Windgeschwindigkeit, Helligkeit, Dämmerung, Rauch, einzelne Luftbestandteile, wie CO2-Anteil, usw. zu erfassen und einer mit der Haltevorrichtung verbundenen Bedieneinheit bereitzustellen.

Eine vorteilhafte Weiterbildung ist, dass die Aufnahmevorrichtung das Gehäuse der Bedieneinheit bildet. Ferner ist vorteilhaft, dass insbesondere innerhalb der Aufnahmevorrichtung zumindest eine Gebäudeelektronik angeordnet ist. Vorzugsweise weist die Gebäudeelektronik eine Leiterplatte auf.

Weiterhin betrifft die Erfindung eine Vorrichtung. Die Vorrichtung umfasst eine Bedieneinheit und eine Haltevorrichtung sowie einen Tischstand. Alle drei Elemente können miteinander verbunden und wieder voneinander getrennt werden. Vorzugsweise kann der Tischstand in mindestens zwei Ausrichtungen an der Haltevorrichtung angeordnet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Figuren näher erläutert werden. In den Figuren tragen funktionsäquivalente Elemente und Bereiche die gleichen Bezugszeichen. Sie werden im Normalfall nur bei ihrer ersten Erwähnung im Detail erläutert. Es zeigen:
- Figur 1: eine Bedieneinheit in perspektivischer Darstellung,
- Figur 2: die Rückseite der Bedieneinheit,
- Figur 3: eine Haltevorrichtung, insbesondere die Vorderseite einer Haltevorrichtung,
- Figur 4: die Rückseite der Haltevorrichtung,
- Figur 5: einen Tischstand,
- Figur 6: ein mit einer Haltvorrichtung verbundener Tischstand,
- Figur 7 und 8: verschiedene Möglichkeiten den Tischstand, die Bedieneinheit mit der Haltevorrichtung zu verbinden.

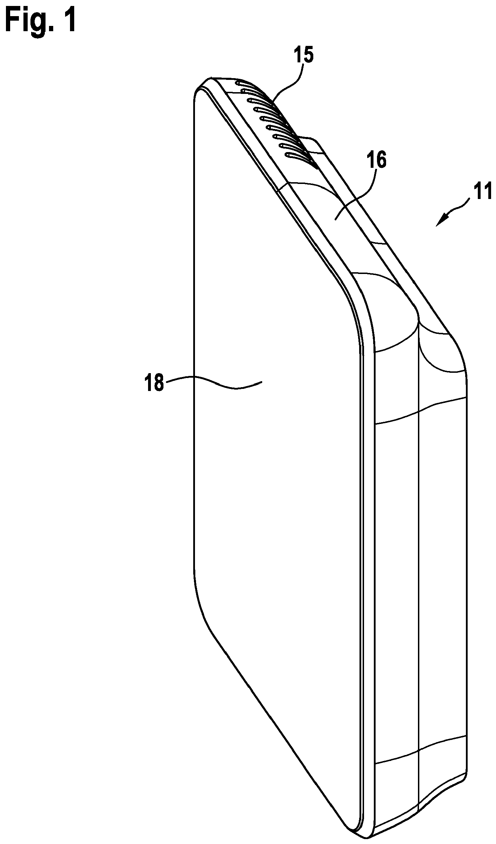

Figur 1 zeigt eine Bedieneinheit 11. Die Bedieneinheit 11 weist eine Gebäudeelektronik und eine Aufnahmevorrichtung 16 für die Gebäudeelektronik auf. Die Aufnahmevorrichtung 16 nimmt die Gebäudeelektronik auf. Insbesondere bildet die Aufnahmevorrichtung 16 das Gehäuse der Bedieneinheit 11. Die Bedieneinheit 11 ermöglicht das Bedienen von Smart-Home oder HVAC Komponenten. Die Bedieneinheit 11 ist insbesondere als eine Smart-Home-Bedieneinheit oder als ein HVAC- Bedieneinheit ausgebildet.

Gemäß einer Weiterbildung der Erfindung weist die Gebäudeelektronik einen Sensor auf und/oder bildet ein Steuergerät für zumindest einen der Smart-Home- oder HVAC- Komponenten. Der Sensor ist ausgebildet Umgebungswerte, beispielsweise Temperatur, Luftfeuchtigkeit, Windgeschwindigkeit, Helligkeit, Luftgüte usw. zu erfassen.

HVAC steht für Heating, Ventilation and Air-Conditioning, also Heizung, Lüftung und Klimatechnik. Die Bedieneinheit 11, insbesondere die HVAC-Bedieneinheit dient der Bedienung und/oder Steuerung von Heizungs-, Lüftungs- und Klimatisierungsanlagen oder einzelnen oder mehreren Komponenten hiervon. Gemäß einer Weiterbildung ist die Bedieneinheit zur Erfassung von Sensorwerten und das Bereitstellen von Sensorwerten ausgebildet.

Die Smart-Home-Bedieneinheit dient der Bedienung und Steuerung von Smart-Home-Komponenten, wie Weiße Ware Geräte und/oder Multimediageräte und/oder Installationsgeräte des Gebäudes, insbesondere Geräte der Gebäudeautomation, vorzugsweise Überwachungs-, Steuer-, Regel- und Optimierungseinrichtungen in Gebäuden.

Vorzugsweise ist die Gebäudeelektronik für den Endverbraucher fest, also nicht reversible mit der Aufnahmevorrichtung 16 verbunden. Der Endverbraucher kann die Komponenten zwar unter gewissen Umständen trennen, dies ist jedoch nicht vorgesehen. Die Bedieneinheit wird insbesondere als eine Einheit verkauft.

Die Bedieneinheit 11 weist insbesondere ein Anzeigemittel, insbesondere ein Display, und/oder insbesondere mindestens ein Bedienelement auf. Das Anzeigemittel ist derart ausgebildet, dass es insbesondere die Frontseite der Bedieneinheit 11 bildet. Ferner bildet das Anzeigemittel die Frontseite der Aufnahmevorrichtung 16. Vorzugsweise sind einige oder alle Bedienelement und das Anzeigemittel als ein Touchdisplay kombiniert. Weiterhin weist die Gebäudeelektronik eine Leiterplatte auf.

Die Leiterplatte dient der elektrischen Verbindung des Anzeigemittels und der Bedienelemente mit weiteren elektrischen Komponenten. Die Leiterplatte ist durch die Aufnahmevorrichtung 16 vor mechanischen Einflüssen geschützt.

Die Aufnahmevorrichtung 16 bildet insbesondere das Gehäuse der Gebäudeelektronik. Vorzugsweise umschließt die Aufnahmevorrichtung 16 die Gebäudeelektronik derart, dass lediglich Bedienelemente und Anzeigemittel von außen zugänglich und sichtbar angeordnet sind.

Ferner weist die Aufnahmevorrichtung 16 beispielhaft Luftschlitze 15 zur Entlüftung auf. Vorzugsweise gibt es eine Eintrittsöffnung und eine Austrittsöffnung, die es ermöglicht, Umgebungsluft an die Sensoren zu bringen. Beispielsweise bildet die Luftschlitze 15 die Austrittsöffnung.

Die Haltevorrichtung 10 ist ausgebildet die Aufnahmevorrichtung 16 aufzunehmen, insbesondere an ihr anzuordnen. Die Aufnahmevorrichtung 16 ist ausgebildet die Haltevorrichtung 10 aufzunehmen, insbesondere an ihr anzuordnen.

In Figur 1 ist beispielhaft eine Bedieneinheit 11 mit einem als Touchdisplay ausgebildeten Anzeigemittel dargestellt. Das Anzeigemittel erstreckt sich über die ganze Vorderseite 18. Die Erstreckung über die gesamte Fläche ist insbesondere begrenzt durch den Rand, welche ein Display technologiebedingt benötigt. Das Anzeigemittel wird durch ein durchsichtiges Element, insbesondere ein Glaselement vor mechanischen Einflüssen geschützt. Das Glaselement bildet die Frontseite der Bedieneinheit 11.

Gemäß einer Weiterbildung erstreckt sich das Anzeigemittel nur über eine Teilfläche der Vorderseite. Insbesondere sind auf der Vorderseite 18 zusätzliche Bedienelemente angeordnet.

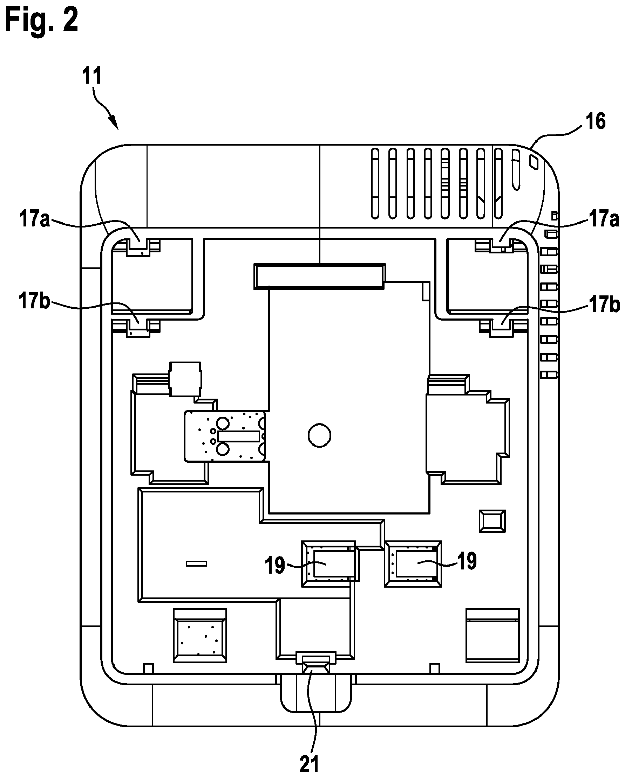

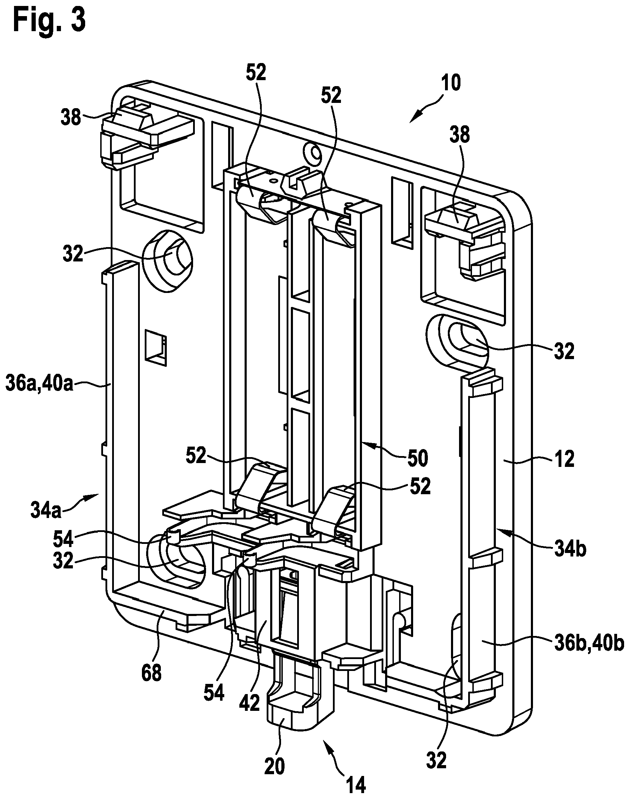

In Figur 2 ist die Rückseite der Aufnahmevorrichtung 16 dargestellt. Die Rückseite ist derart ausgebildet, dass sie mit einer Haltevorrichtung 10 gemäß Figur 3 verbunden werden kann. Die Rückseite weist Ausnehmungen auf. Die Ausnehmungen ermöglichen das Freilegen einzelner Bereiche, insbesondere Kontaktbereiche, der Gebäudeelektronik, vorzugsweise der Leiterplatte, im Inneren der Aufnahmevorrichtung 16. Es werden insbesondere elektrische Kontakte 19, Sensoren oder andere Anschlüsse freigelegt.

Auch weist die Rückseite Schwenkausnehmungen 17 auf. Die Schwenkausnehmungen 17 und die Ausnehmungen für die elektrische Verbindung 19 werden im weiteren Verlauf detailliert beschrieben. Die oberen Schwenkausnehmungen 17a, bzw. unteren Schwenkausnehmungen 17b ermöglichen jeweils ein Verbinden mit unterschiedlich großen Haltevorrichtungen 10. Es reicht im Wesentlichen die Ausbildung eines Paars bzw. einer einzelnen Schwenkausnehmung.

Weiterhin ist auf der Rückseite eine Nase 21 ausgebildet.

In Figur 3 ist die Vorderseite 18 der Haltevorrichtung 10 dargestellt. Die Rückseite der Aufnahmevorrichtung 16 und die Vorderseite der Haltevorrichtung 10 sind nach der Montage einander zugerichtet.

Die Haltevorrichtung 10 weist eine Grundplatte 12 und eine Verriegelungseinheit 14 auf. Ferner weist die Haltevorrichtung 10 ein, insbesondere zwei, Schwenkelemente 38 auf.

Eine korrespondierend ausgebildete Schwenkausnehmung 17 ist an der Aufnahmevorrichtung 16 angeordnet. Das Schwenkelement 38 und die Schwenkausnehmung 17 bilden eine Schwenkeinheit 60. Insbesondere weist das Schwenkelement 38 eine Nase auf, die in die Schwenkausnehmung 17 eingreift. Die Schwenkausnehmung 17 weist hierzu eine Vertiefung. Die Vertiefung ist korrespondierend zu der Nase des Schwenkelements 38 ausgebildet.

Die Grundplatte 12 weist eine Führungseinheit 34a, 34b auf. Vorzugsweise weist die Grundplatte 12 zwei Führungseinheiten auf. Die erste Führungseinheit 34a weist zumindest eine als linke Seitenwand 40a ausgebildetes Führungselements 36a auf. Die linke Seitenwand 40a führt bei einer Montage und/oder Demontage der Aufnahmevorrichtung 16 an/von der Grundplatte 12 zumindest teilweise eine Schwenkbewegung der Aufnahmevorrichtung 16 an der Grundplatte 12.

Vorzugsweise weist die Grundplatte 12 eine zweite Führungseinheit 34b auf. Die zweite Führungseinheit 34b weist zumindest einen als rechte Seitenwand 40b ausgebildetes Führungselement 36b auf. Die rechte Seitenwand 40b führt bei einer Montage und/oder Demontage der Aufnahmevorrichtung 16 an/von der Grundplatte 12 zumindest teilweise eine Schwenkbewegung der Aufnahmevorrichtung 16 an der Grundplatte 12.

Ferner weist die Grundplatte eine untere Seitenwand 68 auf.

Die Grundplatte 12 ist als eine zumindest im Wesentlichen quadratische Platte ausgebildet, die einen Aufnahmebereich 42 zur teilweisen Aufnahme der Verriegelungseinheit 14 aufweist. In einem verriegelten Zustand der Aufnahmevorrichtung 16 an der Haltevorrichtung 10 verläuft die Haupterstreckungsebene der Aufnahmevorrichtung 16 parallel zur Haupterstreckungsachse der Haltevorrichtung 10 und die Verriegelungseinheit 14 verriegelt die Aufnahmevorrichtung 16 an der Grundplatte 12. Die Verriegelungseinheit 14 ist an der Grundplatte 12 angeordnet, insbesondere verrastet. Die Verriegelung erfolgt reversibel.

Die Verriegelungseinheit 14 weist ein Verriegelungselement 20 auf. Das Verriegelungselement 20 ist bedingt beweglich innerhalb einer Führungsöffnung angeordnet. Bedingt bedeutet, dass es in einem definierten Bereich bewegt, bzw. verschoben werden kann. Das Verriegelungselement 20 kann in der Haupterstreckungsachse verschoben werden. Gemäß Figur 3 kann es beispielhaft bedingt nach unten bewegt werden. Es wird durch ein Federelement in seine Ausgangsposition zurückbewegt. Das Federelement bewirkt, dass ein beim Einlegen der Bedieneinheit 11 ausgelenktes Verriegelungselement 20, zurück in die ursprüngliche Position bewegt wird. Es erfolgt eine Verriegelung, insbesondere Verrastung. Es weist eine Vertiefung, bspw. mit einem Hinterschnitt auf. In diesen Hinterschnitt greift bei der Montage der Aufnahmevorrichtung an der Haltevorrichtung eine Nase 21 der Aufnahmevorrichtung ein. Beim Verbinden der Aufnahmevorrichtung 16 mit der Haltevorrichtung 10 greift die Rastnase über eine Ausnehmung in einen Hinterschnitt der Verriegelungseinrichtung 14 ein und stellte eine Verbindung her.

Der Aufnahmebereich 42 ist an der unteren Seitenwand 68 angeordnet. Vorzugsweise ist der Aufnahmebereich 42 aus der unteren Seitenwand 68 gebildet. Es ist auch denkbar, dass der Aufnahmebereich 42 an der linken Seitenwand 40a, an der rechten Seitenwand 40b oder im oberen Bereich der Grundplatte 12 angeordnet ist.

Bei der Montage/Demontage des Verriegelungselements 20 an der Grundplatte 12 wird das Verriegelungselement 20 durch eine Öffnung der Grundplatte 12 in den Aufnahmebereich 42 gebracht.

Die Schwenkelemente 38, die als Vorsprünge ausgebildet sind, sind im oberen Bereich der Grundplatte 24 angeordnet, wobei diese der unteren Seitenwand 68 abgewandt angeordnet sind.

Die Grundplatte 12 weist beispielhaft vier Befestigungsausnehmungen 32 auf, durch die beispielsweise Schrauben oder ähnliche Befestigungsmittel geführt werden können, um die Grundplatte 12 an einer Trägervorrichtung zu befestigen. Insbesondere ist die Trägervorrichtung als eine Wand ausgebildet. Es ist jedoch auch denkbar, dass die Trägervorrichtung eine andere, einem Fachmann als sinnvoll erscheinende Ausgestaltung aufweist, wie beispielsweise eine Ausgestaltung als Möbelwand, als Teil einer Hausbedienvorrichtung o. dgl.

Die Grundplatte 12 weist eine Energiespeicheraufnahmeeinheit 50 auf. Diese ist in Figur 3 beispielhaft als Fach zur Aufnahme von handelsüblichen Batterien oder Akkus im AA Format ausgebildet.

Gemäß einer Weiterbildung kann diese auch zur Aufnahme von Energiespeicher in anderen Formen, beispielsweise A, AA, AAA oder Batterieblöcken ausgebildet sein. Unter einer Batterie wird hierbei auch Akkumulatoren, welche wieder beladen werden können, verstanden.

Wie beispielhaft in Figur 3 dargestellt, weist die Energiespeicheraufnahmeeinheit 50 zwei Aufnahmebereiche, insbesondere Batteriefächer auf. Die Aufnahmebereiche sind jeweils ausgebildet einen zylinderförmige, insbesondere eine AA oder AAA Batterie aufzunehmen. Weiterhin sind Anschlussfahnen 52 zur elektrischen Kontaktierung ausgebildet. Auch ist denkbar, dass ein Akku aufgenommen werden kann. Die Form des Energiespeichers entspricht nur beispielhaft, dem eines AA oder AAA Batterie. Es sind auch andere Formen denkbar.

Weiterhin ist eine elektrische Verbindungseinheit 54 vorgesehen. Die elektrische Verbindungseinheit 54 weist gemäß Figur 3 zwei metallische Federelemente 54 auf. Eines der Federelemente 54 führt den Plus Pol und das andere Federelement 54 führt den Minus-Pol.

Die Aufnahmevorrichtung 16 weist an ihrer Rückseite Ausnehmungen auf. Im Bereich dieser Ausnehmungen sind elektrische Kontaktflächen 19 ausgebildet. Die elektrischen Kontaktflächen 19 sind insbesondere auf der Leiterplatte der Gebäudeelektronik, insbesondere Leiterplatte, ausgebildet. Ist die Bedieneinheit, insbesondere die Aufnahmevorrichtung 16, an der Haltevorrichtung 10 angeordnet, so besteht eine elektrische Verbindung zwischen dem Energiespeicher in der Energiespeicheraufnahme und der Gebäudeelektronik.

Alternativ oder zusätzlich können auch weitere elektrische Verbindungen zwischen der Haltevorrichtung 10 und der Gebäudeelektronik bestehen. Insbesondere können Steckelemente/Dosenelemente ausgebildet sein.

Gemäß einer Weiterbildung weist die Haltevorrichtung 10 eine Kommunikationseinheit auf. Die Kommunikationseinheit erweitert die Gebäudeelektronik nach Montage der Haltevorrichtung 10 mit der Gebäudeelektronik an der Haltevorrichtung 10 um eine Vorrichtung zum Aufbau einer drahtlosen Kommunikationsverbindung. Hierbei kann generell die drahtlose Kommunikation ermöglich werden oder die Gebäudeelektronik, bzw. de Bedieneinheit 11 um ein Kommunikationsverfahren erweitert werden.

Die Kommunikationseinheit kann die Gebäudeelektronik 18 ist ausgebildet eines oder mehrere der folgenden Standards anzubieten. Bluetooth (BT), BT Low Energy, BT Smart, ZigBee, ZigBee Low Energy, Z-Wave, Wi-Fi, NFC, ANT/ANT+, DECT, Home Plug (GreenPhy), HomeMatic IP. Gemäß einer Weiterbildung kann die Kommunikation mittels einem proprietären Verfahren erfolgen.

Vorzugsweise weist die Kommunikationseinheit eine Antenne auf. Die Antenne erlaubt das Senden und Empfang von drahtlosen Signalen.

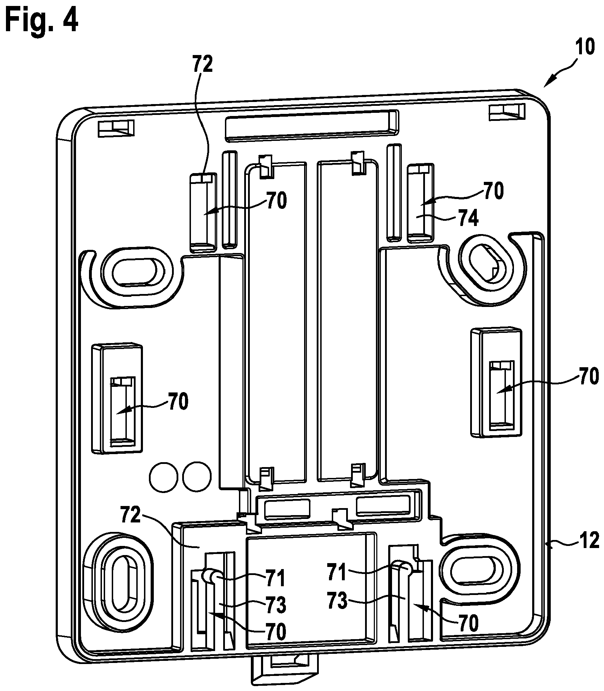

In Figur 4 ist die Rückseite der Haltevorrichtung 10 dargestellt. In der Rückseite sind zweite Befestigungselemente 70 ausgebildet. Beispielhaft sind sechs Stück ausgebildet. Gemäß einer Weiterbildung können auch mehr oder weniger ausgebildet sein. Die Befestigungselemente 70 weisen jeweils eine Vertiefungen 74 und zumindest einen Vorsprung 72 auf. Die Vertiefung 74 und der Vorsprung 72 bilden einen Hinterschnitt. In den Hinterschnitt können die Eingriffselemente 96, welche im Folgenden beschrieben werden, eingreifen. Vorzugsweise weist jedes der Befestigungselemente 70 einen Vorsprung 72 und einen Hinterschnitt auf.

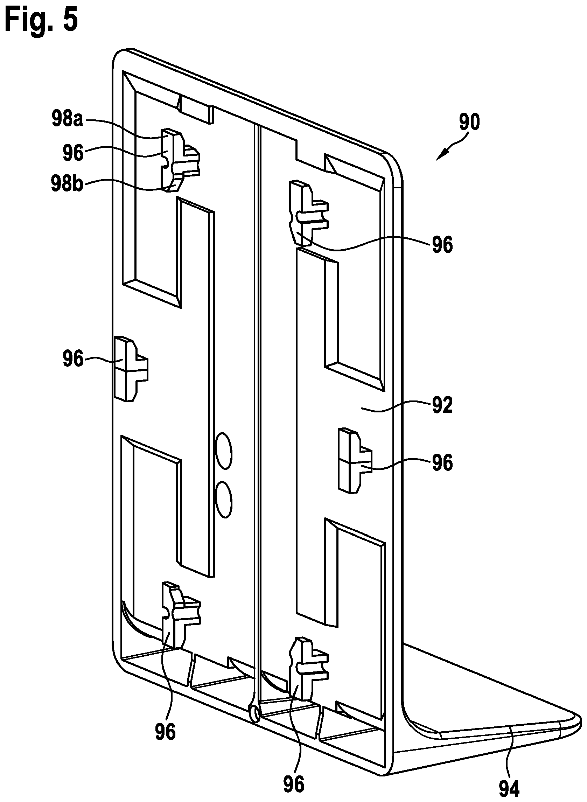

In Figur 5 ist ein Tischstand 90 ausgebildet. Der Tischstand 90 weist eine Tischstandgrundplatte 92 auf. Die Tischstandgrundplatte 92 ist im Wesentlichen gleich groß wie die Haltevorrichtung 10. Die Tischstandgrundplatte 92 ist im Wesentlichen rechteckig, mit insbesondere abgerundeten Ecken ausgebildet. An der Tischstandgrundplatte 92 ist der Tischstandfuß 94 ausgebildet. Die Tischstandgrundplatte 92 und der Tischstandfuß 94 sind einteilig ausgebildet. Zwischen der Tischstandgrundplatte 92 und dem Tischstandfuß 94 ist ein Winkel ausgebildet. Der Winkel ist im Wesentlichen zwischen 70 und 110 Grad. Vorzugsweise ist der Winkel 90 Grad bzw. um die 90 Grad groß.

Weiterhin sind an der Tischstandgrundplatte 92 Eingriffselemente 96 ausgebildet. Die Eingriffselemente 96 weisen jeweils ein Haltebein auf, an dessen Ende ein Haltefuß ausgebildet ist. Der Haltefuß 98a, 98b ist am freien Ende, der Beinelemente ausgebildet. Die Haltefüße 98a zeigen parallel zur Längsachse nach oben. Die Hältefüße 98b zeigen parallel zur Längsachse in die entgegengesetzte Richtung. Bei der Anbringung des Tischstands 90 an der Haltevorrichtung 10 werden die Eingriffselemente 96 jeweils in eine Vertiefung 70 eingeführt. Anschließend bewirkt eine Bewegung entlang der Längsachse, bzw. der Haupterstreckungsachse der Haltevorrichtung 10, dass die Haltefüße 98a, 98b in den Hinterschnitt der Vertiefung 70 bewegt werden. Es entsteht ein Formschluss.

Vorzugsweise weist jedes Haltebein zwei Haltefüße 98a, 98b auf, die zueinander gegenüberliegende angeordnet sind. Somit ist es möglich den Tischstand um 180 Grad verdreht anzuordnen. Es ergibt sich, dass somit das Ende des Tischstands 90 mit dem Standfuß 94 und das untere Ende der Bedieneinheit 11 im montierten Zustand auf der gleichen Seite sind, bzw. einander zugeordnet sind, bzw. in die gleiche Richtung zeigen. Eine weitere Möglichkeit ist, dass das obere Ende der Bedieneinheit 11 und das Ende des Tischstands mit dem Standfuß 94 im montierten Zustand einander zugeordnet sind. Vorzugsweise weist das Eingriffselement 96 einen T- förmigen Querschnitt auf.

Entsprechend taucht einmal der Haltefuß 98a der Eingriffselemente 96 in den Hinterschnitt oder der Haltefuß 98b der Eingriffselemente 96 ein.

Ferner weist zumindest eines der Eingriffselemente 70 eine Rastnase 71 auf. Die Rastnase 71 ist über ein Federelement 73 mit dem Grundplatte 12 verbunden. Die Rastnase 71 ist derart angeordnet, dass ein in das Eingriffselement 70 eingeschobener Haltefuß 96 nicht ohne Überwindung der Federkraft wieder aus dem Eingriffselement 70 entnommen werden kann. Vorzugsweise weisen zwei der Eingriffselemente 70 einen Rastnase auf. Vorzugsweise weisen die beiden unteren Eingriffselement 70 eine Rastnase auf.

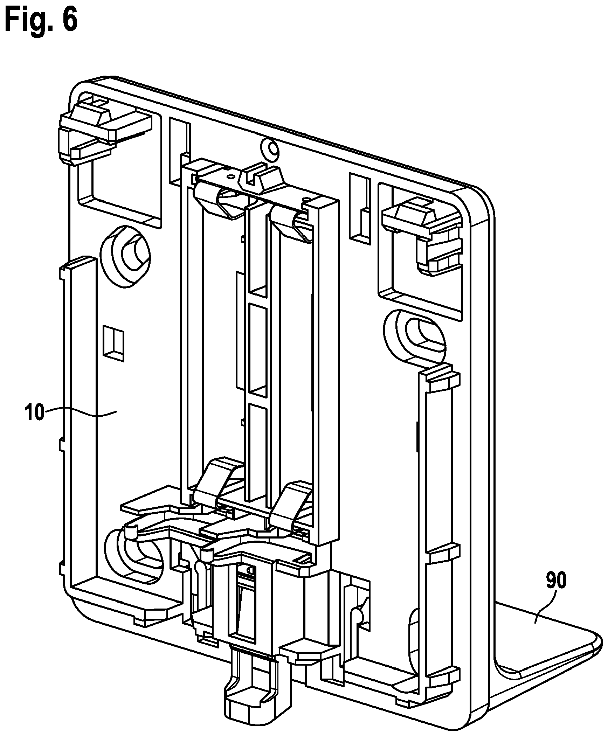

In Figur 6 ist der Tischstand 90 mit der Haltevorrichtung 10 verbunden dargestellt. Die Verbindung ist reversibel. Die Verbindung kann wieder getrennt werden. Insbesondere kann die Verbindung ohne Werkzeug getrennt werden.

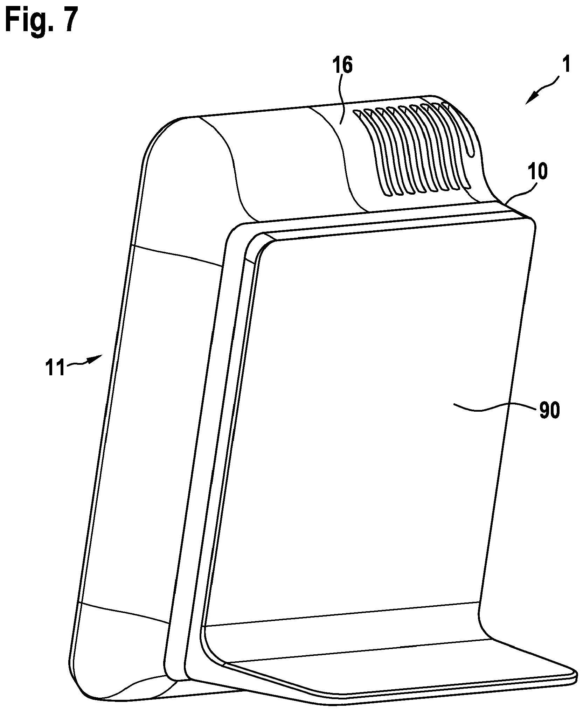

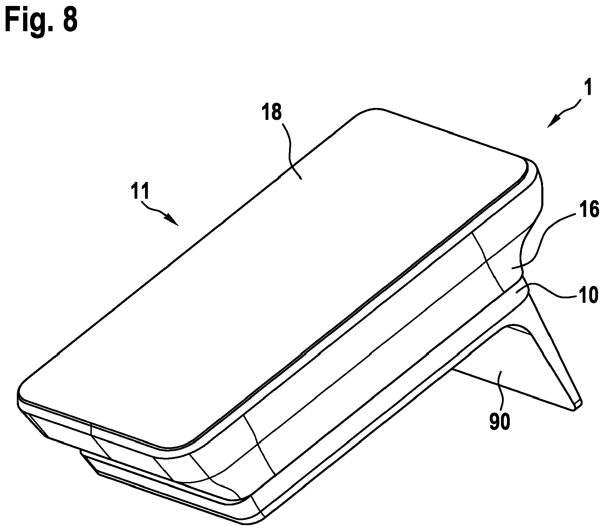

In den Figuren 7 und 8 ist der Tischstand 90 in den beiden unterschiedlichen Möglichkeiten an der Haltevorrichtung 10 montiert dargestellt. Die Haltevorrichtung 10 ist an dem Bedienelement angeordnet.

In Figur 7 und 8 ist die Vorrichtung 1 dargestellt. Die Vorrichtung 1 umfasst das Bedienelement 11, welches reversibel mit der Haltevorrichtung 10 verbunden ist. Die Haltevorrichtung 10 ist reversibel mit dem Tischstand 90 verbunden.

## Patentansprüche

1. Haltevorrichtung (10) zur Halterung einer Bedieneinheit (11), insbesondere einer HVAC- oder ein Smarthome-Bedieneinheit, wobei die Bedieneinheit (11) eine Aufnahmevorrichtung (16) aufweist, und wobei die Haltevorrichtung (10) eine Grundplatte (12) aufweist, wobei die Grundplatte (12):
• zumindest ein erstes Befestigungselement (32) zur Befestigung an einer Trägervorrichtung, insbesondere einer Wand aufweist, und
• zumindest eine Verriegelungseinheit (14) mit einem Verriegelungselement (20) aufweist, wobei das Verriegelungselement (20) ausgebildet ist, die Aufnahmevorrichtung (16) reversible mit der Haltevorrichtung (10) zu verbinden, und
• eine Energiespeicheraufnahmeeinheit (50) aufweist, welche ausgebildet ist einen Energiespeicher aufzunehmen, und
• eine elektrische Verbindungseinheit (52, 54), zur Herstellung einer elektrischen Verbindung zwischen zumindest eines in der Energiespeicheraufnahmeeinheit (50) aufgenommenen Energiespeichers und einer mit der Haltevorrichtung (10) verbundenen Bedieneinheit (11).

2. Haltervorrichtung (10) nach dem vorhergehenden Anspruch, **dadurch gekennzeichnet, dass** die Verriegelungseinheit (14) zumindest ein Federelement aufweist, welches insbesondere als Federzunge oder Spiralfortsatz ausgebildet ist.

3. Haltervorrichtung (10) nach einem der vorhergehenden Ansprüche, **dadurch gekennzeichnet, dass** zumindest ein, insbesondere zwei, drei oder vier, zweite Befestigungselemente (70) ausgebildet sind, welche ausgebildet sind einen Tischständer (90) reversible an der Haltevorrichtung (10) aufzunehmen, wobei das zweite Befestigungselement (70), insbesondere eine Vertiefung (74) und einen Hinterschnitt aufweist, in die ein korrespondierend ausgebildetes Eingriffselement (96) des Tischständers (90) eingreifen kann.

4. Haltevorrichtung (10) nach dem vorhergehenden Anspruch, **dadurch gekennzeichnet, dass** zumindest eines, insbesondere alle, Befestigungselement (70) ausgebildet sind, den Tischständer (90) auf zumindest zwei sich voneinander unterscheidenden Ausrichtungen anzuordnen.

5. Haltevorrichtung (10) nach einem der Ansprüche 3 bis 4, **dadurch gekennzeichnet, dass** zumindest eines der zweiten Befestigungselemente (70) ein zweites Verriegelungselement (71), insbesondere eine Rastnase, aufweist, welches nach eingreifen eines Eingriffselements (96) des Tischständers (90) in ein Befestigungselement (70), das Eingriffselement (96) verrastet.

6. Haltvorrichtung (10) nach einem der vorhergehenden Ansprüche, **dadurch gekennzeichnet, dass** eine Kommunikationseinheit vorgesehen ist, welche einer mit der Haltevorrichtung (10) über die Aufnahmevorrichtung (16) der Bedieneinheit (11) verbundenen Bedieneinheit (11) ermöglicht, drahtlos zu kommunizieren.

7. Haltvorrichtung (10) nach dem vorhergehenden Anspruch, **dadurch gekennzeichnet, dass** die Kommunikationseinheit über die Energiespeicheraufnahmeeinheit Energie bezieht.

8. Haltevorrichtung (10) nach einem der Ansprüche 6 und 7, **dadurch gekennzeichnet, dass** die Kommunikationseinheit eine Antenne aufweist.

9. Haltevorrichtung (10) nach einem der vorhergehenden Ansprüche, **dadurch gekennzeichnet, dass** eine Sensoreinheit vorgesehen ist, welche ausgebildet ist, Umgebungsparameter, wie beispielsweise Lufttemperatur, Luftfeuchtigkeit, Windgeschwindigkeit, Helligkeit, Dämmerung, Rauch, einzelne Luftbestandteile zur erfassen und einer mit der Haltevorrichtung (10) verbundenen Bedieneinheit (11) bereitzustellen.

10. Haltevorrichtung (10) nach einem der vorhergehenden Ansprüche, **dadurch gekennzeichnet, dass** die Aufnahmevorrichtung (16) das Gehäuse der Bedieneinheit (11) bildet und dass insbesondere innerhalb der Aufnahmevorrichtung (16) zumindest eine Gebäudeelektronik angeordnet ist.

11. Vorrichtung (1) umfassend eine Bedieneinheit (11) mit einer Aufnahmevorrichtung (16), wobei an der Aufnahmevorrichtung (16) eine Haltevorrichtung (10) nach einem der vorhergehenden Ansprüche, insbesondere reversibel, angeordnet ist, und wobei an der Haltevorrichtung (10) ein Tischstand (90), insbesondere reversibel, angeordnet ist.
